# EUROPÄISCHE PATENTANMELDUNG

(11) **EP 0 523 365 A2**
(43) Veröffentlichungstag der Anmeldung: **20.01.1993**
(21) Anmeldenummer: 92109423.1
(22) Anmeldetag: 04.06.1992
(51) Int. Cl.: B65G 1/00, B65G 17/24, B65G 47/14, B65G 17/06, B65G 39/04

(54) **Fördervorrichtung für als Schüttgut anfallende kompaktförmige Gegenstände**

(30) Priorität: 06.06.1991 DE 4118602
(71) Anmelder: Popma, Frans, D-60437 Frankfurt (DE); Zura, Franz, D-60598 Frankfurt (DE)
(72) Erfinder: Popma, Frans, D-60437 Frankfurt (DE); Zura, Franz, D-60598 Frankfurt (DE)
(74) Vertreter: Boecker, Joachim, Dr.-Ing.

(57) **Zusammenfassung**

Fördervorrichtung für als Schüttgut anfallende kompaktförmige Gegenstände (1) mit einem Förderband (20), auf welchem gemäß der Erfindung die Gegenstände (1) selbsttätig in Reihen, die parallel und senkrecht zur Förderrichtung verlaufen, in bestimmten Abständen verteilt werden. Das Förderband (20) besteht aus in Förderrichtung nebeneinander angeordneten und miteinder verbundene drehbaren Förderwalzen (22). Benachbarte Förderwalzen (22) sind an gleichen Stellen in Walzenlängsrichtung mit taillienförmigen Einschnürungen (241) versehen sind, durch die sogenannte Taillienabschnitte (24) gebildet werden, die so bemessen sind, daß sie den Fördergegenständen (1) angepaßte trichterartige Öffnungen (28) im Förderband (20) bilden. Die Förderwalzen (22) sind mit einem Antrieb (41) versehen , der sie in derjenigen Richtung zu drehen vermag, bei der eine Förderkraft in Gegenförderrichtung auf die Gegenstände ausgeübt wird.

## Beschreibung

Die Erfindung betrifft eine Fördervorrichtung für als Schüttgut anfallende kompaktförmige Gegenstände gemäß dem Oberbegriff des Anspruches 1.

In der Technik wird gelegentlich die Forderung gestellt, kompaktförmige Gegenstände ungefähr gleicher Größe, die ungeordnet als Schüttgut anfallen, in einem bestimmten Positionsmuster einer Bearbeitungsstation zuzuführen. Bei den Gegenständen kann es sich beispielsweise um in Kisten oder Säcken anfallenden kompaktförmigen landwirtschaftliche Erzeugnisse, wie Kartoffeln, Birnen, Rüben oder Blumenzwiebeln, handeln. Als ein konkretes Beispiel können Tulpenzwiebeln genannt werden, die geordnet in mehreren parallelen Reihen einer Bearbeitungsstation zugeführt werden sollen, in der die an den Zwiebeln an einer Stelle konzentriert vorhandenen Wurzelhaare entfernt werden sollen.

Der Erfindung liegt die Aufgabe zugrunde, eine Fördervorrichtung für als Schüttgut anfallende kompaktförmige Gegenstände zu entwickeln, bei der die Gegenstände selbsttätig auf einem Förderband in Reihen, die parallel und senkrecht zur Förderrichtung verlaufen, in bestimmten Abständen positioniert werden.

Zur Lösung dieser Aufgabe wird eine Fördervorrichtung gemäß dem Oberbegriff des Anspruches 1 vorgeschlagen, welche erfindungsgemäß die im kennzeichnenden Teil des Anspruches 1 genannten Merkmale hat.

Vorteilhafte Ausgestaltungen der Erfindung sind in den weiteren Ansprüchen genannt.

Die Fördervorrichtung eignet sich insbesondere für kompaktförmige Gegenstände, die im wesentlichen keine Kanten und Ecken aufweisen, wie beispielsweise die oben genannten landwirtschaftliche Erzeugnisse. Aber auch kompaktförmige Körper mit Ecken und Kanten, wie beispielsweise würfelförmige Gegenstände oder quaderförmige Gegenstände mit nicht zu großen Unterschieden ihrer Kantenlängen, können mit der Fördervorrichtung gemäß der Erfindung positioniert und gefördert werden.

Anhand der in den Figuren gezeigten Ausführungsbeispiele soll die Erfindung näher erläutert werden. Es zeigen
- Figur 1: ein Ausführungsbeispiel einer Fördervorrichtung gemäß der Erfindung im Schnitt längs der Linie B-B in Figur 2,
- Figur 2: eine Draufsicht auf den linken Teil der Fördervorrichtung in Figur 1,
- Figur 3: eine Seitenansicht der Fördervorrichtung, gesehen in Richtung des Pfeils A in Figur 1,
- Figur 4: ein erstes Beispiel eines Musters für die Profilierung der Förderwalzen,
- Figur 5: ein zweites Muster für die Profilierung der Förderwalzen, bei welchem die Positionierungsabstände senkrecht zur Förderrichtung vergrößert sind,
- Figur 6: ein drittes Muster für die Profilierung der Förderwalzen, bei welchem die Positionierungsabstände in Förderrichtung vergrößert sind,
- Figur 7: ein viertes Beispiel eines Musters für die Profilierung der Förderwalzen, bei dem die Positionierungsreihen in Förderrichtung abwechselnd gegeneinander versetzt sind,
- Figur 8: ein fünftes Beispiel eines Musters für die Profilierung der Förderwalzen, bei welchem die Positionierungsabstände in Förderrichtung und senkrecht dazu gegenüber dem kleistmöglichen Abstand vergrößert sind und zugleich eine abwechselnde Versetzung der Positionierungsreihen in Förderrichtung vorhanden ist,
- Figur 9: ein erstes Paar von Walzenabschnitten, aus denen alle Walzen aufgebaut werden können,
- Figur 10: ein zweites Paar von Walzenabschnitten, aus denen alle Walzen aufgebaut werden können.

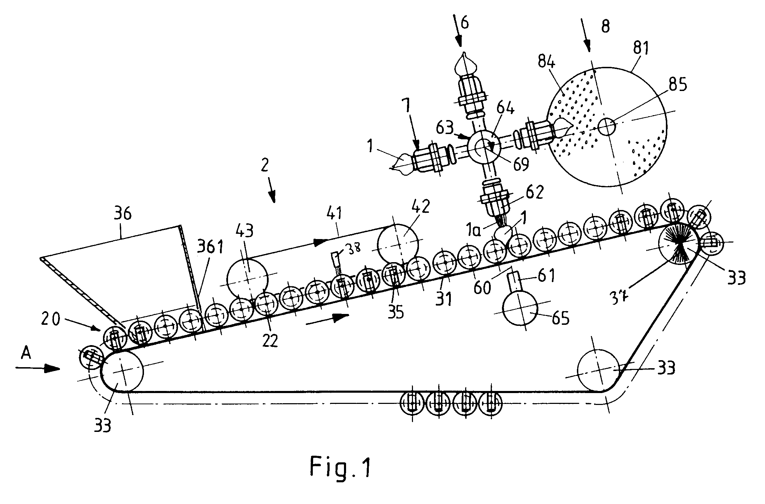

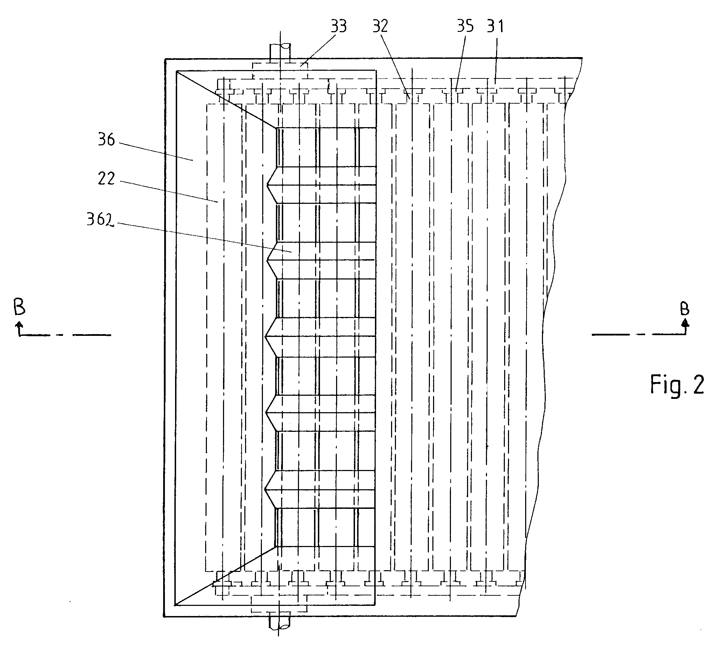

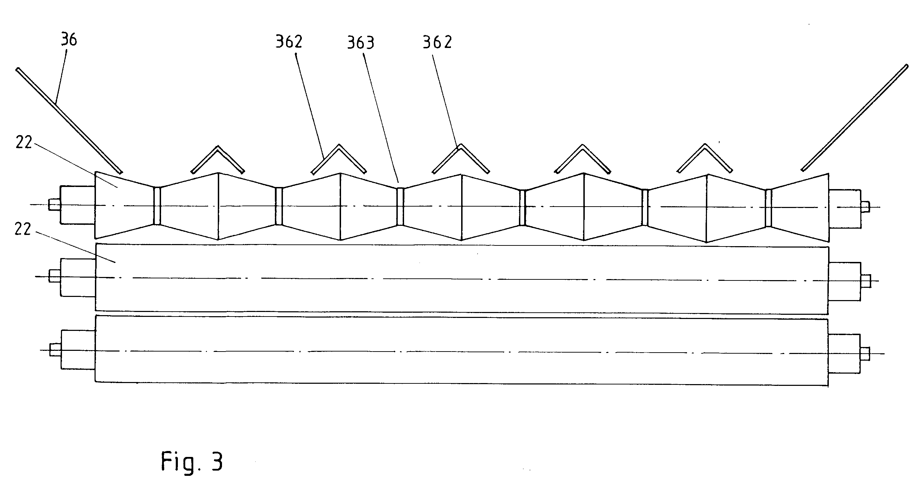

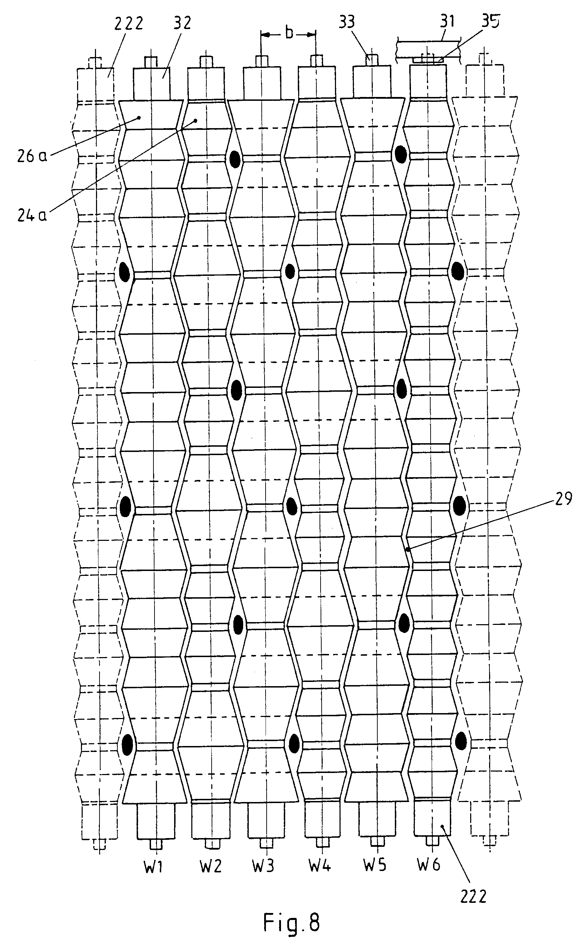

Wie die Figuren 1 bis 3 zeigen, gehört zu der Fördervorrichtung gemäß der Erfindung ein endloses Förderband 20, welches aus nebeneinanderliegenden Förderwalzen 22 aufgebaut ist. Die Verbindung dieser Förderwalzen erfolgt beispielsweise mittels zweier Kettenräder 31, von denen eines in Figur 1 durch einen dicken Strich angedeutet ist und die über je drei Kettenräder 33 laufen. An den Kettengliedern sind vertikalen Lagerbleche 35 befestigt, in denen die Förderwalzen mit ihren Lagerzapfen 33 (siehe auch Figur 8) frei drehbar gelagert sind. Da bei einer solchen Befestigung der Förderwalzen an den Ketten der Abstand zwischen den Förderwalzen beim Herumlaufen um ein Kettenrad 33 vergrößert wird, befindet sich auf der Kettenradachse unter dem Förderband eine mitdrehende Bürste 37, die ein Durchfallen von Gegenstände durch das Förderband 20 verhindert. Anstelle der beschriebenen Kette mit Lagerblechen 35 kann auch eine sogenannte Hohlbolzenkette verwendet werden, bei der die Förderwalzen mit ihren Lagerzapfen 33 direkt in den Kettengliedern gelagert werden können. Anstelle von Ketten können auch Riemen verwendet werden, an denen die Förderwalzen gelagert werden.

Das Förderband 20 ist längs seiner Förderstrecke vorzugsweise mit einer Steigung in Förderrichtung versehen; die etwa 10 bis 30 Grad, vorzugsweise 15 bis 20 Grad, gegenüber der Horizontalen beträgt. Durch diese Steigung wirkt auf die auf den Förderwalzen liegenden Gegenstände eine Schwerkraftkomponente in Gegenförderrichtung. Vorzugsweise ist diese Neigung der Förderstrecke einstellbar durch Drehung des gesamten Gestelles, in dem das Förderband gelagert ist.

Die Gegenstände werden in einen Einschüttschacht 36 geschüttet, der einen offenen Boden hat, so daß die Gegenstände auf das Förderband 20 fallen. Durch eine Eintrittsöffnung 361 können die Gegenstände den Einschüttschacht 36 in Förderrichtung verlassen. Am Boden des Einschüttschachtes können gewölbte oder dachförmig abgewinkelte Leitbleche 362 vorhanden sein, die so angeordnet sind, daß sich am Boden des Einschüttschachtes in Förderrichtung verlaufende Rinnen 363 bilden, die mit den in Förderrichtung verlaufenden Positionierungsreihen fluchten.

Figur 1 zeigt ein Ausführungsbeispiel einer Fördervorrichtung gemäß der Erfindung, die mit einer angeschlossenen Bearbeitungsstation zusammenarbeitet. In dem der Verteilung der Gegenstände auf die Positionierungsstellen dienenden Bereich des Förderbandes werden die Förderwalzen in Gegenförderrichtung gedreht, so daß auf die Gegenstände eine Förderkraft entgegen der Förderrichtung ausgeübt wird. Im gezeigten Ausführungsbeispiel erfolgt die Rotation dieser Förderwalzen über einen gemeinsamen Antrieb, der aus einem angetriebenen Endlosband 41 besteht, das über zwei Rollen 42, 43 läuft, von denen mindestens eine angetrieben wird. Das Band liegt mit seiner Unterseite gegen die Antriebszapfen 222 (Figur 8) der Förderwalzen an. Diese Antriebszapfen bestehen zur Erhöhung der Reibung zumindest an ihrer Peripherie aus einem Material mit hohem Reibungskoeffizienten, wie beispielsweise aus Gummi oder Kunststoff. Ein solcher Walzendrehantrieb kann auf einer oder beiden Seiten des Förderbandes vorgesehen sein.

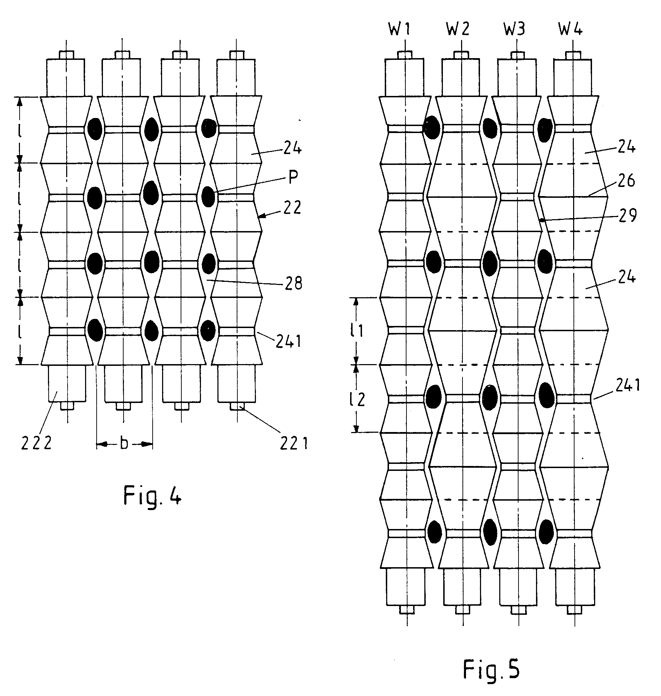

In den Figuren 1 bis 3 sind die Förderwalzen der Einfachheit halber symbolisch als zylindrische Walzen dargestellt. Ihre tatsächliche Form geht aus den Figuren 4 bis 8 hervor und soll nunmehr erläutert werden:

Figur 4 zeigt einen Ausschnitt von vier benachbarten Walzen 22 des Förderbandes 20. In Längsrichtung bestehen die Förderwalzen aus rotationssymmetrischen Abschnitten 24 mit taillenförmigen Einschnürungen oder Ausnehmungen 241. Solche Walzenabschnitte werden im folgenden als "Taillienabschnitte" bezeichnet. Zwei in Förderrichtung benachbarte Taillienabschnitte zweier Walzen bilden eine trichterartige Öffnung 28 im Förderband, die zur Aufnahme eines der zu positionierenden Gegenstände dient. Diese trichterförmigen Öffnungen werden im folgenden als "Aufnahmetrichter" bezeichnet. Die Ausnehmungen 241 und damit die Aufnahmetrichter 28 sind in ihrer Maßen der Größe der zu positionierenden Gegenstände angepaßt.

In Figur 4 sind sämtliche Förderwalzen in Längsrichtung aus Taillienabschnitten 24 mit der Länge l aufgebaut. Diese Ausführungsform ist diejenige mit der - bei gegebener Größe der Gegenstände - maximal möglichen Anzahl von Aufnahmetrichtern 28. Die Stellen, an denen ein Gegenstand positioniert werden kann, sind durch kleine volle Ellipsen p hervorgehoben.

Wenn bei unveränderter Größe der Gegenstände der Abstand der gebildeten Positionsreihen senkrecht zur Förderrichtung vergrößert werden soll, so läßt sich dies nicht einfach dadurch erreichen, daß die Taillienabschnitte in Längsrichtung der Förderwalze gestreckt werden. Eine solche Maßnahme hätte zur Folge, daß die Flanken der Einschnürung gegenüber der Längsachse der Förderwalze zu flach verlaufen würden, so daß die Zentrierwirkung des Aufnahmetrichters bei der Positionierung verloren gehen würde und folglich eine exakte Postitionierung nicht mehr stattfinden würde.

Um den genannten Abstand zwischen senkrecht zur Förderrichtung benachbarten Aufnahmetrichter zu vergrößern, können zwischen benachbarten Taillienabschnitten zylindrische Abschnitte eingefügt werden. Eine solche Bauform hat jedoch den Nachteil, daß beim Rotieren der Förderwalzen keine seitlich zu den Aufnahmetrichtern hin wirkende Kraft auf die Gegenstände ausgeübt wird, so daß eine zuverlässige Belegung aller Aufnahmetrichter nicht gewährleistet ist.

Um Letzteres zu erreichen, kann gemäß Figur 5 verfahren werden. Hier ist bei jeder zweiten Förderwalze w2 und w4 zwischen benachbarten Taillienabschnitten 24 ein Abschnitt 26 mit einer Ausbauchung vorgesehen, die den Einschnürungen (Ausnehmungen) 241 der in Förderrichtung benachbarten beiden Taillienabschnitte 24 derart angepaßt ist, daß hier nur ein schmaler Spalt 29 zwischen den in Längsrichtung benachbarten Walzenabschnitten vorhanden ist. Natürlich kann die axiale Länge l2 der keine Aufnahmetrichter bildenden Walzenabschnitte von der axialen Länge l1 der die Aufnahmetrichter bildenden Walzenabschnitte verschieden sein, solange eine hinreichend große Steigung der Flanken der ineinandergreifenden Bauch- und Taillienabschnitte vorhanden ist, um eine ausreichende seitliche Kraftkomponente auf die auf ihnen liegenden Gegenstände auszuüben.

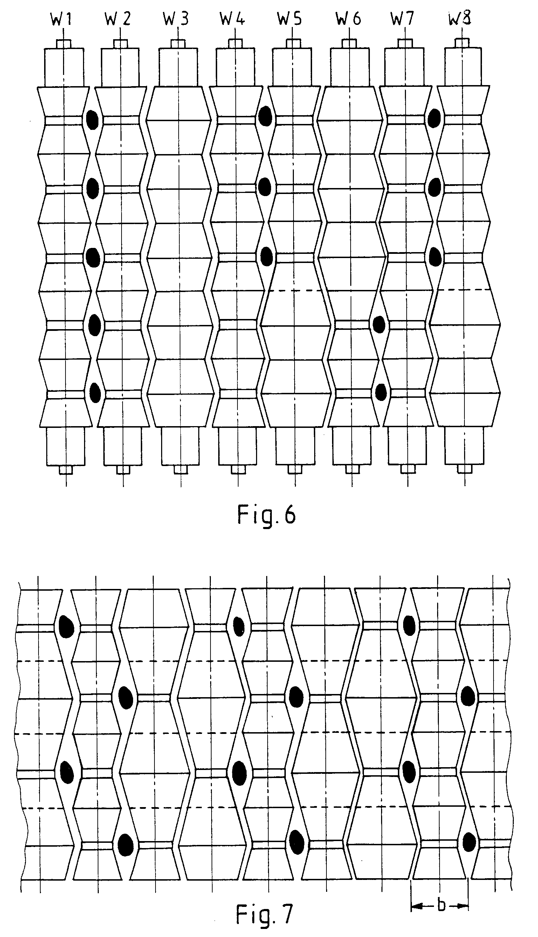

Figur 6 zeigt, wie der Abstand zwischen den senkrecht zur Förderrichtung verlaufenden Reihen von Aufnahmetrichtern gegenüber Figur 4 und Figur 5 vergrößert werden kann. Zu diesem Zweck wird nach je zwei benachbarten Förderwalzen w1, w2 und w4, w5 eine Walze w3 beziehungsweise w6 eingefügt, die ausschließlich mit Bauchabschnitten 26 besetzt ist. Im oberen Teil von Figur 6 wird auf diese Weise der Abstand zwischen den senkrecht zur Förderrichtung verlaufenden Positionierungsreihen im Vergleich zum entsprechenden Abstand b in Figur 4 verdoppelt.

Im unteren Teil der Figur 6 ist eine Verdreifachung des Abstandes b in Figur 4 dargestellt, die dadurch erreicht wird, daß zwischen benachbarten Förderwalzenpaaren w1, w2 und w6, w7 drei Förderwalzen eingefügt sind, von denen die erste w3 und dritte w5 Bauchabschnitte haben und die mittlere w4 Taillienabschnitte hat.

Figur 7 zeigt eine Ausführungsform, bei der die in Förderrichtung verlaufenden Positionierungsreihen abwechselnd um das Maß b, welches gleich einer Förderwalzenteilung ist, gegeneinander versetzt sind. Diese Ausführungsform ergibt sich aus der im oberen Teil von Figur 6 gezeigten Ausführungsform, wenn die Einfügung von Bauchabschnitten senkrecht zur Förderrichtung abwechselnd um jeweils eine Walzenteilung b versetzt wird.

Eine sehr komplexe Walzenanordnung zeigt Figur 8. Hier sind die Abstände zwischen den Aufnahmetrichtern sowohl in Förderrichtung als auch senkrecht dazu gegenüber dem kleinstmöglichen Abstand gemäß Figur 4 vergrößert. Außerdem sind die in Förderrichtung verlaufenden Positionierungsreihen zusätzlich um ein Drittel des Abstandes in Förderrichtung (eine Walzenteilung) gegeneinander versetzt. Man erkennt, daß sich das wiederkehrende Muster der unterschiedlich aufgebauten Förderwalzen über sechs hintereinander angeordnete Förderwalzen erstreckt. Diese sechs Walzen, die in Figur 8 mit vollausgezogene Linien dargestellt sind, haben in Walzenlängsrichtung die folgenden wiederkehrenden Muster: Walze w1 = Taille-Bauch-Bauch-Bauch; Walze w2 = Bauch-Taille-Taille-Taille; Walze w3 = Taille-Bauch; Walze w4 = Taille-Taille-Bauch-Taille; Walze w5 = Bauch-Bauch-Taille-Bauch; Walze w6 nur Taillen. Die Walzen w4 und w5 sind also, abgesehen von einer Versetzung in axialer Richtung, genauso aufgebaut wie die Walzen w2 beziehungsweise w1.

An den Enden der Walzen sind in Figur 8 jeweils nur halbe Walzenabschnitte vorhanden, um eine in Richtung zur weiter innen liegenden Positionierungsreihe wirkende Seitenkraft zu erhalten.

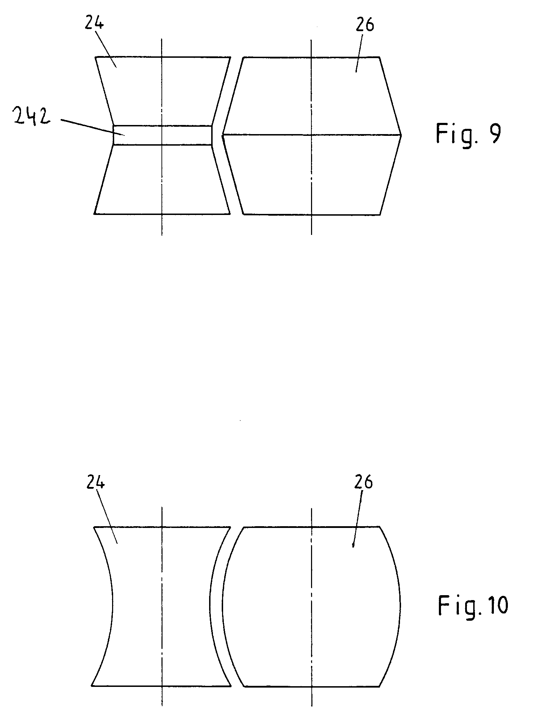

Man erkennt, daß abgesehen von den halben Walzenabschnitten an den Walzenenden, sämtliche Walzen in den Figuren 4 bis 8 aus nur zwei verschiedenen Typen von Walzenabschnitten, einem Bauchabschnittstyp 26 und einem Taillienabschnittstyp 24 gemäß Figur 9, aufgebaut sind. Der zylindrische Bund 242 des Taillienabschnittes kann weggelassen werden. Sein Vorteil besteht darin, daß die Festigkeit der Walze an dieser Stelle nicht zu stark geschwächt wird.

Statt die Flanken der Walzenabschnitte geradlinig auszubilden, können sie auch kurvenförmig, also nach außen konkav beziehungsweise konvex ausgebildet sein, wie dies Figur 10 zeigt.

Betrachtet man beispielsweise Figur 4, so wird deutlich, daß man statt von ausschließlich vorhandenen Taillienabschnitten auch von ausschließlich vorhandenen Bauchabschnitten sprechen könnte, wenn man die Definition eines Walzenabschnittes um eine halbe Walzenabschnittsteilung in Längsrichtung der Walze verschiebt. Die Begriffe "Taillienabschnitt" und "Bauchabschnitt" sind jedoch auf den Abstand b (Figur 8) zwischen benachbarten Walzen bezogen. In Bezug auf diesen Abstand hat ein Taillienabschnitt in der Mitte einen bedeutend kleineren Durchmesser und ein Bauchabschnitt einen bedeutend größeren Durchmesser.

Dort, wo keine Aufnahmetrichter zwischen in Förderrichtung benachbarten Taillien-und Bauchabschnitten gebildet werden, ist zwischen den Mantellinien der in Förderrichtung benachbarten Walzenabschnitte nur ein verhältnismäßig schmaler Spalt 29 (Figur 5) vorhanden, der so bemessen ist, daß eine Berührung der Walzen mit Sicherheit vermieden wird und eventuell die Gegenständen begleitende Schmutzteilchen durch das Band hindurchfallen können.

Die Fördervorrichtung gemäß der Erfindung arbeitet in folgender Weise: Wenn das Förderband 20 läuft, werden die im Einschüttschacht 36 zwischen den Förderwalzen liegenden Gegenstände mitgenommen und aus dem Einschüttschacht herausgefördert. Die Gegenstände, die nicht bereits in einem Aufnahmetrichter 28 liegen, werden durch die in Gegenförderrichtung wirkende Drehbewegung der Förderwalzen im Bereich des Antriebs 41 bis 43 sowie zusätzlich durch die infolge der Neigung des Förderbandes in Förderbandrichtung erzeugte Schwerkraftkomponente in Gegenförderrichtung bewegt. Dabei werden die Gegenstände infolge der schrägen Kanten der walzen-Bauchabschnitte zu denjenigen Linien parallel zur Förderrichtung gelenkt, auf denen die Aufnahmetrichter 28 liegen.

Die in Figur 8 gezeigte Walzenanordnung kann beispielsweise mit großem Erfolg eingesetzt werden, wenn in einer sich anschließenden Bearbeitungsstation die Wurzelhaare von Blumenzwiebeln entfernt werden sollen. Die Blumenzwiebeln werden dabei an ihren Wurzelhaaren von pneumatisch arbeitenden Blas- und Saugeinrichtungen 6, 61 bis 65 ergriffen und zu einer Abschervorrichtung 8, 81 bis 85 geführt, wie dies in der deutschen Patentanmeldung "Anlage zum Entfernen von Teilen einer kompaktförmigen Frucht", welche die gleiche Priorität wie die vorliegende Anmeldung hat, im einzelnen beschrieben wird. Hierbei sind mit Rücksicht auf den Raumbedarf der pneumatischen Greifvorrichtung 6 und der Abschervorrichtung 8 bestimmte Mindestabstände zwischen den zugeführten Blumenzwiebel in Förderrichtung und senkrecht dazu einzuhalten, was durch eine Fördervorrichtung gemäß der Erfindung mit einer Anordnung der Förderwalzen gemäß Figur 8 in idealer Weise erreicht wird. Dank der sechs in Förderrichtung parallelen Reihen von zugeführten Blumenzwiebel, welche Reihen in Förderrichtung abwechselnd gegeneinander versetzt sind, können sechs Greifvorrichtungen 6 und sechs Abschervorrichtung 8 auf engem Raum parallel arbeiten. Diese Zahl kann natürlich bei entsprechender Verbreiterung des Förderbandes weiter vergrößert werden.

Durch Anbringung einer Bürste 38 (Figur 1), die sich senkrecht zur Förderrichtung über das Förderband (20) erstreckt, kann die erstrebte Verteilung der Gegenstände auf die Aufnahmetrichter 28 zusätzlich gesichert werden. Die Anordnung der Bürste erfolgt in dem- Verteilerbereich (41-43), vorzugsweise in der in Figur 1 rechten Hälfte dieses Bereiches. Die Bürstenhaare (Bürstenborsten) reichen herunter bis etwa zu den Förderwalzeen 22. Sie sind so weich, daß die Gegenstände durch die Bürstenhaare hindurchlaufen, wobei die Gegenstände, die noch nicht in einem Aufnahmetrichter liegen, einen Impuls erhalten, der ihre Wanderung in einen freien Aufnahmetrichter begünstigt. Die Verwendung solcher Bürsten hat einen ähnlichen Effekt wie die Schrägstellung des Förderbandes, so daß eine eventuell vorhandene Schrägstellung des Bandes verkleinert oder völlig aufgehoben werden kann. Natürlich können in Förderrichtung auch mehrere Bürsten 38 nebeneinander angeordnet werden.

## Patentansprüche

1. Fördervorrichtung für als Schüttgut anfallende kompaktförmige Gegenstände (1) mit einem Förderband (20), auf welchem die Gegenstände selbsttätig in Reihen, die parallel und senkrecht zur Förderrichtung verlaufen, in bestimmten Abständen verteilt werden, **dadurch gekennzeichnet**,
- daß das Förderband (20) aus in Förderrichtung nebeneinander angeordneten und miteinder verbundene drehbaren Förderwalzen (22) besteht und
- daß benachbarte Förderwalzen (22) an gleichen Stellen in Walzenlängsrichtung mit taillienförmigen Einschnürungen (241) versehen sind, durch die sogenannte Taillienabschnitte (24) gebildet werden, die so bemessen sind, daß sie den Fördergegenständen angepaßte trichterartige Öffnungen (28) ("Aufnahmetrichter") im Förderband bilden.

2. Fördervorrichtung nach Anspruch 1, **dadurch gekennzeichnet**, daß in einem Verteilerbereich des Förderbandes die Förderwalzen mit einem Antrieb (41 bis 43) versehen sind, der die Förderwalzen (20) in derjenigen Richtung zu drehen vermag, bei der eine Förderkraft in Gegenförderrichtung auf die Gegenstände (1) ausgeübt wird.

3. Fördervorrichtung nach Anspruch 1 oder 2, **dadurch gekennzeichnet**, daß das Förderband (20) in Förderrichtung eine feste oder einstellbare Steigung aufweist, durch die eine Schwerkraftkomponente in Gegenförderrichtung auf die sich auf dem Förderband befindenden Gegenstände ausgeübt wird.

4. Fördervorrichtung nach Anspruch 3, **dadurch gekennzeichnet**, daß die Steigung etwa 10 bis 30 Grad, vorzugsweise 15 bis 20 Grad, beträgt.

5. Fördervorrichtung nach einem der vorhergehenden Ansprüche, **dadurch gekennzeichnet**, daß mit Ausnahme der Stellen, an denen Aufnahmetrichter (28) gebildet werden, nur ein kleiner Abstand (29) zwischen den benachbarten Mantellinien benachbarter Förderwalzen vorhanden ist.

6. Fördervorrichtung nach einem der vorhergehenden Ansprüche, **dadurch gekennzeichnet**, daß sämtliche Förderwalzen (22) aus in Walzenlängsrichtung lückenlos aufeinanderfolgenden Taillienabschnitten (24) aufgebaut sind (Figur 4).

7. Fördervorrichtung nach einem der Ansprüche 1 bis 5, , **dadurch gekennzeichnet**, daß zur Vergrößerung des senkrecht zur Förderrichtung vorhandenen Abstandes zwischen benachbarten Aufnahmetrichtern (28) zwischen in Walzenlängsrichtung benachbarten Taillienabschnitten (24) der Förderwalzen zylindrischen Walzenabschnitte vorhanden sind.

8. Fördervorrichtung nach einem der vorhergehenden Ansprüche, **dadurch gekennzeichnet**, daß zur Vergrößerung des senkrecht zur Förderrichtung vorhandenen Abstandes zwischen benachbarten Aufnahmetrichtern (28) bei jeder zweiten Förderwalze zwischen in Walzenlängsrichtung benachbarten Taillienabschnitten (24) ein mit einer Ausbauchung versehener Abschnitt (26) ("Bauchabschnitt") vorhanden ist, wobei die Ausbauchung dieses Abschnittes den Taillienabschnitten (24) der beiden in Förderrichtung benachbarten Walzenabschnitte angepaßt ist (Figur 5).

9. Fördervorrichtung nach einem der vorhergehenden Ansprüche**, dadurch gekennzeichnet**, daß zur Vergrößerung des in Förderrichtung vorhandenen Abstandes zwischen benachbarten Aufnahmetrichtern (28) zwischen je zwei benachbarten Förderwalzen (w1,w2; w4,w5), die mittels Taillienabschnitte (24) zusammen Aufnahmetrichter (28) bilden, mindenstens eine Förderwalze (w3) liegt, die mit Bauchabschnitten (26) in die Taillienabschnitte (24) ihrer beiden benachbarten Förderwalzen (w2,w4) hineinragt (Figur 6).

10. Fördervorrichtung nach Anspruch 9**, dadurch gekennzeichnet**, daß die Einfügung eines Bauchabschnitts (26) zwischen je zwei in Förderrichtung benachbarten Taillienabschnitten für die mehreren in Förderrichtung vorhandenen Reihen von Walzenabschnitten in Förderrichtung versetzt erfolgt (Figur 7).

11. Fördervorrichtung nach einem der vorhergehenden Ansprüche, **dadurch gekennzeichnet**, daß an den beiden Enden der Förderwalzen zum seitlichen Abschluß der durch das Förderband gebildeten Positionierungsebene zylindrische Abschnitte oder axiale Hälften (24a, 26a) (Figur 8) von Taillienabschnitten beziehungsweise Bauchabschnitten derart angeordnet sind, daß sie auf die sich auf ihnen befindenden Gegenstände eine zur Bandmitte hin gerichtete Kraft verursachen (Figur 8).

12. Fördervorrichtung nach einem der vorhergehenden Ansprüche, **dadurch gekennzeichnet**, daß die schräg zur Längsachse der Förderwalzen (22) verlaufenden Flanken der Walzenabschnitt (24,26) geradlinig verlaufen.

13. Fördervorrichtung nach einem der Ansprüche 1 bis 11, **dadurch gekennzeichnet**, daß die schräg zur Längsachse der Förderwalzen (22) verlaufenden Flanken der Walzenabschnitt (24,26) kurvenförmig verlaufen.

14. Fördervorrichtung nach einem der vorhergehenden Ansprüche, **dadurch gekennzeichnet**, daß die Förderwalzen aus zylindrischen tragenden Stangen aufgebaut sind, auf die mit einem entsprechenden axialen Loch versehene Taillienabschnitte und Bauchabschnitte aufschiebbar sind, die auf den Stangen drehsicher, zum Beispiel durch Preßsitz, durch Kleben oder durch axiale Verspannung, befestigt werden.

15. Fördervorrichtung nach einem der vorhergehenden Ansprüche, **dadurch gekennzeichnet**, daß am Anfang der Förderstrecke des Förderbandes (20) ein Einschüttschacht (36) für die Gegenstände angeordnet ist.

16. Fördervorrichtung nach Anspruch 15, **dadurch gekennzeichnet**, daß am Boden des Einschüttschachtes (36) in Förderrichtung orientierte Leitbleche (362) vorhanden sind, welche die Gegenstände in die Lage der Positionierungsreihen auf dem Förderband lenken.

17. Fördervorrichtung nach einem der vorhergehenden Ansprüche, **dadurch gekennzeichnet**, daß die Förderwalzen über an endlosen Ketten (31) angebrachte Lagerbleche (35) miteinander verbunden sind.

18. Fördervorrichtung nach einem der Ansprüche 2 bis 17, **dadurch gekennzeichnet**, daß der Antrieb zur Drehung der Förderwalzen im Verteilerbereich durch ein umlaufendes Band (41) erfolgt, welches gegen Antriebsstutzen (222) an den Enden der Förderwalzen (22) anliegt.

19. Fördervorrichtung nach einem der vorhergehenden Ansprüche, **dadurch gekennzeichnet**, daß sie mit einer Bearbeitungsstation für die Gegenstände integriert ist, die am Förderband stromabwärts von dem Verteilerbereich (41 bis 43) angeordnet ist.

20. Förderrichtung nach einem der vorhergehenden Ansprüche, **dadurch gekennzeichnet**, daß im Verteilerbereich (41-43) über dem Förderband (20) quer zur Förderrichtung mindestens eine Bürste (38) angeordnet ist, deren Haare (Borsten) etwa bis in den peripheren Bereich der Förderwalzen (22) reichen.
